# EUROPÄISCHE PATENTSCHRIFT

(11) **EP 3 135 546 B1**
(45) Veröffentlichungstag und Bekanntmachung des Hinweises auf die Patenterteilung: **06.10.2021**
(21) Anmeldenummer: 16185508.5
(22) Anmeldetag: 24.08.2016
(51) Int. Cl.: B60R 25/24, G07C 9/00, H04L 9/00, H04L 9/30, H04L 9/32, H04W 12/08, H04W 12/102, H04L 29/08

(54) **AUTOSCHLÜSSEL, KOMMUNIKATIONSSYSTEM SOWIE VERFAHREN HIERZU**
CAR KEY, COMMUNICATION SYSTEM AND METHOD FOR SAME
CLÉ D'AUTOMOBILE, SYSTÈME DE COMMUNICATION ET PROCÉDÉ ASSOCIÉ

(30) Priorität: 27.08.2015 DE 102015114209
(43) Veröffentlichungstag der Anmeldung: 01.03.2017
(73) Patentinhaber: certgate GmbH, 40477 Düsseldorf (DE)
(72) Erfinder: Rasegi, Lukas, 30559 Hannover (DE)
(74) Vertreter: Aisch, Sebastian

(56) Entgegenhaltungen:
- DE-A1-102012 202 781
- US-A1- 2002 178 369
- US-A1- 2014 169 564
- Chris Hoffman: "How to Pair a Bluetooth Device to Your Computer, Tablet, or Phone", , 14. April 2015 (2015-04-14), XP055325128, Gefunden im Internet: URL:http://www.howtogeek.com/214185/beginn er-geek-how-to-pair-devices-over-bluetooth / [gefunden am 2016-12-01]
- Anonymous: "BMW 7er 2015: Display-Key als Auto-Schlüssel einer neuen Zeit", , 10. Juni 2015 (2015-06-10), XP055325132, Gefunden im Internet: URL:http://www.bimmertoday.de/2015/06/10/b mw-7er-2015-display-key-als-auto-schlussel -einer-neuen-zeit/ [gefunden am 2016-12-01]
- CHRIS LAI ET AL: "A secure anonymous key mechanism for privacy protection in VANET", INTELLIGENT TRANSPORT SYSTEMS TELECOMMUNICATIONS,(ITST),2009 9TH INTERNATIONAL CONFERENCE ON, IEEE, PISCATAWAY, NJ, USA, 20 October 2009 (2009-10-20), pages 635-640, XP031619112, ISBN: 978-1-4244-5346-7

## Beschreibung

Die Erfindung betrifft einen Autoschlüssel für ein Straßenfahrzeug, der zur Steuerung der Zutritts- und/oder Wegfahrkontrolle eines Straßenfahrzeuges vorgesehen ist und hierfür seine hauptsächliche Verwendung findet. Die Erfindung betrifft ebenso ein Kommunikationssystem zum Kommunizieren mit einem Straßenfahrzeug via eines auf einem Endgerät ablaufenden Anwendungsprogramm sowie ein Verfahren zur Kommunikation hierzu.

In vielen Bereichen ist es heutzutage notwendig, den Zugriff auf sensible Daten sowie die Steuerung von komplexen Maschinen digital zu kontrollieren. Hierfür werden nicht selten Chipkarten eingesetzt, welche personifiziert sind und so den kontrollierten Zugriff auf die Daten sowie die Steuerung der komplexen Maschine zu gewährleisten.

Zurzeit gibt es große Bestrebungen, im Automotivbereich die Straßenfahrzeuge zu vernetzen, so dass beispielweise via Internet ein Zugriff auf ein Fahrzeug und seine hierdurch angebotenen und bereitgestellten Funktionen zu ermöglichen. Um den Komfort eines derartigen Zugriffs für den Endkunden möglichst groß zu gestalten, wird als Kommunikationsendgerät die heutzutage weit verbreiteten Smartphones oder Tablets bevorzugt, auf denen ein heruntergeladenes Anwendungsprogramm (App) ausgeführt wird, das wiederum die Kommunikation mit dem eigenen Straßenfahrzeug ermöglichen soll.

Das Straßenfahrzeug hat hierbei eine Kommunikationsschnittstelle, über die das spezielle Anwendungsprogramm des Automobilherstellers auf die Funktionen und Steuerungen des Straßenfahrzeuges, die über diese Kommunikationsschnittstelle zur Verfügung gestellt werden, zugreifen kann. Hierfür ist in der Regel ein Funkmodul notwendig, das sich in ein öffentliches Datennetz via beispielsweise einer GSM-Karte einwählt und somit das Straßenfahrzeug mit dem Internet verbindet (oder einem anderen Funkkommunikationsnetzwerk).

Ein hierbei großes Themenfeld stellt dabei die Sicherheit dar. So ist es notwendig, dass der Zugriff auf das Straßenfahrzeug und seine Funktionen via Netzwerk dahingehend abgesichert ist, dass der Zugriff nur durch Berechtigte erfolgt. Hierbei haben sich im Stand der Technik bereits viele Authentifizierungsverfahren etabliert, die jedoch alle sehr umständlich und unkomfortabel für den Endkunden sind. Da jedoch in der jüngsten Vergangenheit immer wieder Berichte zu hören sind, in denen es Dritten gelungen ist, über diese in dem Straßenfahrzeug verbauten Funkkommunikationsmodulen unberechtigterweise den Zugriff auf das Straßenfahrzeug zu erlangen, was massiv die Sicherheit im Straßenverkehr gefährdet, muss zwingend eine authentifizierte und gesicherte Kommunikation mit dem Straßenfahrzeug über das Netzwerk erfolgen.

So ist beispielsweise aus der DE 10 2013 112 943 A1 ein Chipkartenlesegerät für Chipkarten bekannt, das ein Funkkommunikationsmodul hat, mit dem das Chipkartenlesegerät drahtlos mit einem Endgerät verbunden werden kann. Über diese drahtlose Verbindung zwischen dem Endgerät (beispielsweise Smartphone, Tablet, Laptop oder Desktoprechner) kann dann das jeweilige Endgerät und der Benutzer auf die von der Chipkarte bereitgestellten Sicherheitsfunktionen zugreifen, um so beispielsweise Nachrichten mithilfe der auf der eingeschobenen Chipkarte gespeicherten Zertifikate zu authentifizieren oder ggf. eine Nachricht zu verschlüsseln.

Nachteilig hierbei ist jedoch, dass ein solches Gerät meist sehr unhandlich ist, da die in das Kartenlesegerät einschiebbaren Chipkarten hinsichtlich ihrer Abmessungen nach ISO 7816 stabilisiert sind und eines der weit verbreitesten Formate das ID-1 mit Abmessungen von 85,6 mm x 53,98 mm ist und somit sehr unhandlich. Für den privaten Endnutzer wird durch dieses Gerät jedoch der entscheidende Nachteil geschaffen, dass ein weiteres Gerät zusätzlich zu dem Endgerät notwendig ist, um Nachrichten und Daten zu authentifizieren (beispielsweise zu signieren) und/oder zu verschlüsseln. Ein derart zusätzliches Gerät würde dabei die Akzeptanz der Endkunden bezüglich der Kommunikationsverbindung mit einem Straßenfahrzeug stark verringern.

Aus der US 2007/0294746 A1 ist ein Autoschlüssel mit einem Kommunikationsmodul bekannt.

Aus der DE 10 2012 202 781 A1 ist ein Verfahren zur Nutzungskontrolle von Kraftfahrzeugen bekannt, bei dem der Nutzer mit Hilfe einer Token-ID und einem Smartphone verifiziert wird, wobei mit Hilfe eines entfernten Computersystems dann entweder die Nutzung des Kraftfahrzeuges freigeschaltet oder ein Schließfach geöffnet wird, aus dem sich der Nutzer dann seinen Autoschlüssel entnehmen kann.

Es ist daher Aufgabe der vorliegenden Erfindung ein verbessertes Kommunikationssystem zu schaffen, mit dem zum einen sicher mit einem Straßenfahrzeug über ein insbesondere öffentliches Netzwerk kommuniziert werden kann und gleichzeitig die Akzeptanz derartiger Kommunikationssysteme beim Endkunden erhöht wird.

Die Aufgabe wird erfindungsgemäß mit dem Autoschlüssel gemäß Anspruch 1, einem Kommunikationssystem gemäß Anspruch 8 sowie einem Verfahren gemäß Anspruch 15 hierzu gelöst.

Gemäß Anspruch 1 wird ein Autoschlüssel für ein Straßenfahrzeug vorgeschlagen, das ein Gehäuse und eine an oder in dem Gehäuse vorgesehene mechanische und/oder elektrische Schlüsselfunktion hat. Die Schlüsselfunktion des Autoschlüssels dient dabei zur Steuerung der Zutritts- und/oder Wegfahrkontrolle eines Straßenfahrzeuges. Derartige mechanische oder elektronische Schlüsselfunktionen sind dabei hinreichend bekannt. Eine mechanische Schlüsselfunktion wäre dabei beispielsweise ein ganz normaler Bart-Schlüssel, um beispielsweise das Türschloss oder das Zündschloss eines Straßenfahrzeuges zu bedienen. In der jüngeren Vergangenheit jedoch bei den Fahrzeugen weit verbreitet ist eine elektronische Schlüsselfunktion, bei der mithilfe eines Funkmoduls an dem Autoschlüssel einerseits und einem Empfänger an dem Straßenfahrzeug andererseits die Zutritts- und Wegfahrkontrolle des Straßenfahrzeuges realisiert werden kann. So kann durch Bedienen eines entsprechenden Bedienknopfes an dem Autoschlüssel ein Funksignal an das Straßenfahrzeug übertragen werden, der dann die Türen ver- oder entriegelt. Auch das sogenannte schlüssellose Öffnen und Verschließen der Autotür sowie das Starten des Motors durch die reine Anwesenheit des Autoschlüssels wird durch eine elektronische Schlüsselfunktion realisiert, bei der mithilfe eines Nahfeld-Funkmoduls (beispielsweise ein Transponder) die Anwesenheit des richtigen Schlüssels in Bezug auf das Straßenfahrzeug durch das Straßenfahrzeug detektiert und dann entsprechend die Zutritts- und/oder Wegfahrkontrolle realisiert wird.

Erfindungsgemäß weist der Autoschlüssel des Weiteren ein elektronisches PKI-Modul auf, das eine digitale Public-Key-Infrastruktur-Funktionalität mit wenigstens einem Public-Key und einem dazu korrespondierenden Privat-Key bereitstellt. PKI-Module dienen dazu, eine Public-Key-Infrastruktur-Funktionalität zur Verfügung zu stellen, die beispielsweise das digitale Signieren von Daten oder Nachrichten oder das Verschlüsseln von Nachrichten oder Daten mithilfe eines Public-Key-Verschlüsselungsverfahrens ermöglicht. Derartige PKI-Module finden sich beispielsweise in Chipkarten oder werden durch Chipkartenlesegeräte, wie sie beispielsweise aus der DE 10 2013 112 943 A1 bekannt sind, bereitgestellt. Der Public-Key und der dazugehörige Private-Key bilden dabei ein Schlüsselpaar, das geeignet ist, ein Public-Key Sicherheitsverfahren (signieren, verschlüsseln) durchzuführen. Selbstverständlich können auf in dem Autoschlüssel bzw. dem PKI-Modul mehrere Schlüsselpaare hinterlegt sein.

Erfindungsgemäß ist nun vorgesehen, dass sich in dem Autoschlüssel ein solches elektronisches PKI-Modul befindet, wobei dieses PKI-Modul besonders vorzugsweise von einer elektronischen Schlüsselfunktion verschieden ist.

Der Autoschlüssel weist weiterhin ein Kommunikationsmodul auf, das zum Verbinden des Autoschlüssels mit einer zu dem Straßenfahrzeug verschiedenen Endgeräteeinrichtung ausgebildet ist, um so den Autoschlüssel über das Kommunikationsmodul mit einer solchen Endgeräteeinrichtung, insbesondere einem auf der Endgeräteeinrichtung ablaufenden Anwendungsprogramm, zu verbinden. Auf das Kommunikationsmodul kann dabei vorzugsweise von einer elektronischen Schlüsselfunktion und deren Funkmodul verschieden sein. So wird insbesondere nicht die Funkverbindung der elektronischen Schlüsselfunktion zum Verbinden des Autoschlüssels mit dem Anwendungsprogramm verwendet. Ein solches Kommunikationsmodul zum Verbinden mit einer Endgeräteeinrichtung kann beispielsweise auf Basis von WLAN, Bluetooth oder anderen Funkkommunikationsstandards erfolgen. Denkbar ist auch, dass eine drahtgebundene Verbindung mit dem Kommunikationsmodul und der Endgeräteeinrichtung erfolgt.

Der Autoschlüssel ist des Weiteren eingerichtet, bei einer bestehenden Verbindung zwischen dem Funkkommunikationsmodul und einer Endgeräteeinrichtung die Public-Key-Infrastruktur-Funktionalität des PKI-Moduls des Autoschlüssels auf der Endgeräteeinrichtung bereitzustellen, so dass mithilfe des Autoschlüssels die Public-Key-Infrastruktur-Funktionalität des PKI-Moduls auf dem Endgerät verwendet werden kann.

Hierdurch wird es beispielsweise möglich, mithilfe der Endgeräteeinrichtung Nachrichten an das Fahrzeug zu verschicken, die beispielsweise mithilfe der Public-Key-Infrastruktur-Funktionalität des PKI-Moduls des Autoschlüssels signiert und/oder verschlüsselt wurden. Der erfindungsgemäße Autoschlüssel ersetzt somit die an sich bekannten Chipkartenlesegeräte, die die Chipkartenfunktion von eingeschobenen Chipkarten bereitstellen und wodurch eine entsprechende Public-Key-Infrastruktur-Funktionalität erhalten werden kann. Es bedarf somit für den privaten Endkunden, wenn er mit seinem Straßenfahrzeug oder einer anderen Teilnehmereinrichtung mittels der Endgeräteeinrichtung kommunizieren möchte, außer seinem Autoschlüssel keine weiteren Geräte, um eine sichere Kommunikation mit dem Straßenfahrzeug aufzubauen.

Dadurch wird die Funktionalität des Autoschlüssels hinsichtlich einer Bereitstellung einer Public-Key-Infrastruktur-Funktionalität erweitert, so dass der Autoschlüssel ebenfalls als PKI-Gerät verwendet werden kann.

Der digitale Public-Key und der dazu korrespondierende Privat-Key können beispielsweise in einem digitalen Datenspeicher des Autoschlüssels in dem PKI-Modul abgespeichert werden, wobei der digitale Datenspeicher diesbezüglich insbesondere revisionssicher ist.

Unter einer Public-Key-Infrastruktur-Funktionalität im Sinne der vorliegenden Erfindung wird insbesondere die aus der Kryptographie bekannten Sicherungsverfahren verstanden, die auf dem Zusammenspiel von Public-Key und Private-Key basieren. Derartige Verfahren sind beispielsweise das digitale Signieren mithilfe des Public-Keys und Überprüfung der Signatur mithilfe des Private-Keys oder einer Verschlüsselung von Daten durch Verschlüsseln mithilfe des Public-Keys und Entschlüsseln mithilfe des Private-Keys. Ein Public-Key und ein dazu korrespondierender Private-Key bilden dabei ein zusammenhängendes Schlüsselpaar, die in der Regel auch nur zusammen ihre entsprechende Funktionalität korrekterweise ausführen können. Unter dem Bereitstellen der PKI-Funktionalität wird im Sinne der vorliegenden Erfindung insbesondere verstanden, dass die Endgeräteeinrichtung bzw. das auf der Endgeräteeinrichtung ablaufende Anwendungsprogramm auf die entsprechende PKI-Funktionalität zugreifen kann und somit die entsprechenden Verfahren, die mit dem Public-Key/Private-Key möglich sind, ausführen kann.

So ist es beispielsweise denkbar, dass der Autoschlüssel zum digitalen Signieren von Daten ausgebildet ist, indem das Kommunikationsmodul zu signierende digitale Daten empfängt, wenn das Kommunikationsmodul mit der Endgeräteeinrichtung verbunden ist, eine digitale Signatur mittels des PKI-Moduls in Abhängigkeit von den empfangenen digitalen Daten erzeugt und das Kommunikationsmodul die erzeugte digitale Signatur an die Endgeräteeinrichtung überträgt. Die Endgeräteeinrichtung kann dann die an das Straßenfahrzeug zu sendenden Daten zusammen mit der erzeugten digitalen Signatur versenden, wobei das Straßenfahrzeug dann vorteilhafterweise dazu eingerichtet ist, basierend auf den empfangenen Daten und den bekannten PKI-Verfahren die digitale Signatur zu überprüfen.

Die an den Autoschlüssel mittels des Kommunikationsmoduls gesendeten zu signierenden digitalen Daten können dabei jene Daten sein, die an das Straßenfahrzeug gesendet werden sollen. Es ist aber auch denkbar, dass es sich hierbei um einen sogenannten Hash-Wert der zu sendenden Daten handelt, wobei dieser Hash-Wert dann mithilfe des PKI-Moduls des Autoschlüssels digital signiert wird, indem zu dem Hash-Wert eine digitale Signatur erzeugt wird.

In einer weiteren vorteilhaften Ausführungsform ist der Autoschlüssel eingerichtet, mittels des Kommunikationsmoduls den wenigstens einen in dem PKI-Modul enthaltenen Public-Key an die mit dem Kommunikationsmodul verbundene Endgeräteeinrichtung zu übertragen. Auch durch dieses Übertragen des Public-Keys kann eine PKI-Funktionalität bereitgestellt werden, da nun die Endgeräteeinrichtung und das jeweilige Anwendungsprogramm, das den Public-Key angefordert hat, entsprechende Datennachrichten oder Befehle an das Straßenfahrzeug mithilfe des Public-Keys verschlüsseln und dann versenden kann. Das Straßenfahrzeug ist dann insbesondere ausgebildet, die empfangenen verschlüsselten Daten mithilfe des dort abgespeicherten Private-Keys zu entschlüsseln.

Um die Sicherheit bei der Verwendung des Autoschlüssels als PKI-Endgerät entsprechend zu gewährleisten, ist das Kommunikationsmodul so ausgebildet, dass es nur dann eine Verbindung mit einer Endgeräteeinrichtung zulässt, wenn die Endgeräteeinrichtung eine Verbindungsanfrage an das Kommunikationsmodul sendet und das Kommunikationsmodul eine solche Verbindungsanfrage empfängt, wobei eine solche Verbindungsanfrage einen von dem Kommunikationsmodul generierten gültigen Verbindungscode enthält. Demnach ist das Kommunikationsmodul ausgebildet, eine Verbindungsanfrage von einer Endgeräteeinrichtung zu empfangen und den in der Verbindungsanfrage enthaltenen Verbindungscode dahingehend zu überprüfen, ob es sich um einen gültigen Verbindungscode handelt oder nicht.

Erst wenn die Verbindungsanfrage einen gültigen Verbindungscode enthält, baut das Kommunikationsmodul eine Verbindung mit der Endgeräteeinrichtung auf und stellt die entsprechende PKI-Funktionalität zur Verfügung.

In einer weiteren vorteilhaften Ausführungsform weist der Autoschlüssel in dem Gehäuse ein Display zur Wiedergabe von Informationen auf. Zusammen mit der vorhergehenden Ausführungsform kann hierdurch beispielsweise erreicht werden, dass das Kommunikationsmodul einen gültigen Verbindungscode generiert, um so den Autoschlüssel mit einer Endgeräteeinrichtung zu verbinden, wobei der gültige Verbindungscode dann auf dem Display des Autoschlüssels angezeigt wird, so dass er von dort von dem Benutzer abgelesen und in der Endgeräteeinrichtung eingetragen wird, von wo aus dann die Verbindungsanfrage mit dem abgelesenen und eingegebenen gültigen Verbindungscode an das Kommunikationsmodul des Autoschlüssels gesendet wird.

In einer weiteren ganz besonders vorteilhaften Ausführungsform weist der Autoschlüssel eine Chipkartenleseeinrichtung zum Aufnehmen einer Chipkarte mit integriertem Schaltkreis auf, wobei die Chipkartenleseeinrichtung zum Bereitstellen der Chipkartenfunktionen der Chipkarte eingerichtet ist, wenn die Chipkarte in der Chipkartenleseeinrichtung aufgenommen ist. Dabei ist das PKI-Modul zur Bereitstellung der Public-Key-Infrastruktur-Funktionalität mittels der durch die Chipkartenleseeinrichtung bereitgestellten Chipkartenfunktion der aufgenommenen Chipkarte ausgebildet.

Auf der Chipkarte kann sich beispielsweise ein Public-Key/Private-Key Schlüsselpaar befinden, auf deren Basis dann das PKI-Modul die Public-Key-Infrastruktur-Funktionalität bereitstellt. Hierbei ist es insbesondere denkbar, dass das PKI-Modul zur Bereitstellung der Public-Key-Infrastruktur-Funktionalität durch die Chipkartenleseeinrichtung mit aufgenommener Chipkarte gebildet wird, wenn beispielsweise die Chipkarte einen integrierten Schaltkreis aufweist, durch den Daten signiert und/oder verschlüsselt werden können.

Dabei ist es denkbar, dass in dem Straßenfahrzeug ebenfalls eine entsprechende Chipkartenleseeinrichtung vorhanden ist, in die eine hierzu korrespondierende Chipkarte eingelegt werden kann, so dass Autoschlüssel und Straßenfahrzeug über die zuvor beschriebene sichere Kommunikationsverbindung kommunizieren können.

Die Aufgabe wird im Übrigen auch mit dem Kommunikationssystem gemäß Anspruch 8 gelöst, wobei das Kommunikationssystem einen Autoschlüssel, wie vorstehend beschrieben, aufweist und ein auf einer Endgeräteeinrichtung ausführbares Anwendungsprogramm hat. Das Anwendungsprogramm ist ausgebildet, auf die Endgeräteeinrichtung abzulaufen bzw. ausgeführt zu werden und stellt somit die Kommunikation mit einem dritten Kommunikationsteilnehmer mittels der Endgeräteeinrichtung zur Verfügung. Das Anwendungsprogramm kann als Synonym für die Endgeräteeinrichtung verstanden werden.

Demnach ist das Anwendungsprogramm eingerichtet, mittels der Endgeräteeinrichtung (und deren Kommunikationsmittel) eine separate digitale Kommunikation mit dem dritten Kommunikationsteilnehmer einerseits und eine Verbindung mit dem Autoschlüssel andererseits einzurichten, wenn das Anwendungsprogramm auf der Endgeräteeinrichtung ausgeführt wird.

Der dritte Kommunikationsteilnehmer kann ebenfalls ein PKI-Modul aufweisen, um eine Public-Key-Infrastruktur-Funktionalität bereitzustellen und die entsprechenden Public-Key-Funktionen auszuführen (Public-Key Verfahren).

Der dritte Kommunikationsteilnehmer kann beispielsweise ein Straßenfahrzeug sein. Das Kommunikationssystem umfasst vorteilhafterweise den dritten Kommunikationsteilnehmer, insbesondere das Straßenfahrzeug, sodass dieser/dieses Bestandteil des erfindungsgemäßen Kommunikationssystems ist.

Erfindungsgemäß kann der dritte Kommunikationsteilnehmer und das Anwendungsprogramm ausgebildet sein, die jeweiligen Public-Keys untereinander auszutauschen, um die entsprechenden PKI-Funktionen durchführen zu können. So kann das Anwendungsprogramm, das mit dem Autoschlüssel verbunden ist oder war, eingerichtet sein, den Public-Key des Schlüsselpaares des Autoschlüssels an den dritten Kommunikationsteilnehmer zu übertragen, so dass dieser den Public-Key empfängt und ggf. für eine spätere Kommunikation hinterlegt. Demgemäß kann der dritte Kommunikationsteilnehmer eingerichtet sein, seinen Public-Key eines in dem dritten Kommunikationsteilnehmer hinterlegten Schlüsselpaares an das Anwendungsprogramm zu übertragen. Das Schlüsselpaar (Public/Private-Key) des Autoschlüssels ist dabei grundsätzlich verschieden von dem Schlüsselpaar (Public/Private-Key) des dritten Kommunikationsteilnehmers. Ist der dritte Kommunikationsteilnehmer ein Straßenfahrzeug, so kann das Straßenfahrzeug in der Bordelektronik ein PKI-Modul aufweisen, in dem das Schlüsselpaar hinterlegt und das ebenfalls eine Public-Key-Infrastruktur-Funktionalität bereitstellt.

Dabei kann das Anwendungsprogramm, und somit auch die Endgeräteeinrichtung, eingerichtet sein, an den dritten Kommunikationsteilnehmer zu sendende Daten digital zu signieren, indem die Daten oder davon abgeleitete Daten (Hash-Werte) an den Autoschlüssel übertragen, mittels des PKI-Moduls auf dem Autoschlüssel eine digitale Signatur erzeugt und die erzeugte digitale Signatur zurück an das Anwendungsprogramm übertragen wird, wobei das Anwendungsprogramm dann die zu sendenden Daten zusammen mit der erzeugten digitalen Signatur an den dritten Kommunikationsteilnehmer übertragt. Das Erzeugen der digitalen Signatur erfolgt dabei mittels des Private-Key des Autoschlüssels.

Der dritte Kommunikationsteilnehmer wiederum empfängt die Daten und die digitale Signatur und überprüft mithilfe der auf dem dritten Kommunikationsteilnehmer hinterlegten Zertifikate (insbesondere der Public-Key des Autoschlüssels, die zuvor ausgetauscht wurden, dann die digitale Signatur und kann so die Echtheit der Daten überprüfen. Mit anderen Worten, der dritte Kommunikationsteilnehmer ist so ausgebildet, dass es nach Empfang der Daten und digitalen Signatur zur Verifikation der digitalen Signatur eingerichtet ist.

Ebenso kann das Anwendungsprogramm eingerichtet sein, von dem dritten Kommunikationsteilnehmer empfangene Daten, die eine digitale Signatur bzgl. des dritten Kommunikationsteilnehmers enthalten, zu verifizieren, indem die digitale Signatur basierend auf den Daten oder davon abgeleitete Daten zusammen mittels gängiger PKI-Verfahren verifiziert wird. Hierzu wird in der Regel der zuvor von dem dritten Kommunikationsteilnehmer an das Anwendungsprogramm übertragene Public-Key verwendet.

Selbstverständlich ist es auch denkbar, dass der dritte Kommunikationsteilnehmer die an das Anwendungsprogramm zu sendenden Daten signiert, indem mittels des PKI-Moduls des dritten Kommunikationsteilnehmers basierend auf den zu sendenden Daten oder davon abgeleiteten Daten eine digitale Signatur erzeugt wird, die dann zusammen mit den Daten an das Anwendungsprogramm übertragen wird.

Darüber hinaus ist es vorteilhaft, wenn das Anwendungsprogramm eingerichtet ist, Daten digital zu verschlüsseln, indem mittels des zuvor ausgetauschten Public-Keys des dritten Kommunikationsteilnehmers zu sendende Daten verschlüsselt werden, und zwar unter Anwendung gängiger Public-Key Verschlüsselungsverfahren. Die verschlüsselten Daten werden dann an den dritten Kommunikationsteilnehmer übertragen, wo sie mit Hilfe des PKI-Moduls des dritten Kommunikationsteilnehmers und dem darin enthaltenen Private-Key entschlüsselt werden.

Selbstverständlich ist das Anwendungsprogramm vorteilhafterweise auch eingerichtet, verschlüsselte Daten zu entschlüsseln. Hierzu wurden zunächst die von dem dritten Kommunikationsteilnehmer zu sendenden Daten mittels des Public-Keys des Autoschlüssels, der zuvor ausgetauscht wurde, verschlüsselt und dann an das Anwendungsprogramm übertragen. Basierend auf der Verbindung des Anwendungsprogramms mit dem Autoschlüssel und der Bereitgestellten PKI-Funktionalität werden nun diese verschlüsselten Daten mittels des Private-Keys des Autoschlüssels entschlüsselt. Hierfür werden in der Regel die verschlüsselten Daten an den Autoschlüssel übertragen, dort durch das PKI-Modul entschlüsselt und anschließend an das Anwendungsprogramm zurückgesendet.

Somit lässt sich beispielsweise die Kommunikation zwischen der Endgeräteeinrichtung und einem Straßenfahrzeug verschlüsseln, indem hierfür das PKI-Modul des Autoschlüssels und des Straßenfahrzeuges verwendet wird.

Selbstverständlich können die Daten auch signiert und verschlüsselt werden.

Die Erfindung wird anhand der beigefügten Figuren beispielhaft erläutert. Es zeigen:
- Figur 1 -: schematische Darstellung des erfindungsgemäße Autoschlüssels;
- Figur 2 -: schematische Darstellung einer sicheren Kommunikation mit einem Straßenfahrzeug.

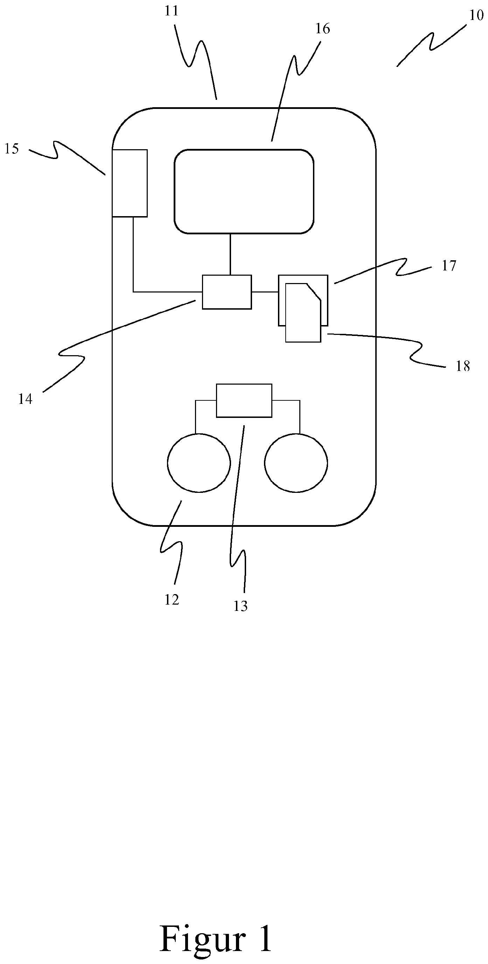

Figur 1 zeigt schematisch einen Autoschlüssel 10, der ein Gehäuse 11 aufweist, an dessen einen vorderen Seite Bedientasten 12 angeordnet sind. Diese Bedientasten 12 stehen signaltechnisch mit einer elektronischen Schlüsselfunktion 13 in Verbindung, um die Zutritts- und/oder Wegfahrkontrolle eines Straßenfahrzeuges zu steuern. Aus Übersichtlichkeitsgründen ist auf die Darstellung einer mechanischen Schlüsselfunktion verzichtet worden.

Mit Hilfe der Bedientasten 12 kann dabei die elektronische Schlüsselfunktion betätigt werden, sodass beispielsweise durch Drücken einer Bedientaste 12 die Fahrzeugtüren entriegelt oder verriegelt werden können. Hierfür sendet die elektronische Schlüsselfunktion 13 ein Funksignal an das Straßenfahrzeug, das dieses Funksignal empfängt und entsprechend interpretiert.

Von dieser elektronischen Schlüsselfunktion 13 unabhängig ist erfindungsgemäß in dem Autoschlüssel ein PKI-Modul 14 vorgesehen, das eine digitale Public-Key-Infrastruktur-Funktionalität mit wenigstens einem Public-Key und einem dazu korrespondierenden Private-Key bereitstellt. Mit Hilfe des PKI-Moduls 14 können somit digitale Signaturen erzeugt und Daten ver- und ggf. auch entschlüsselt werden.

Das PKI-Modul 14 steht dabei mit einem Kommunikationsmodul 15 signaltechnisch in Verbindung, wobei das Kommunikationsmodul zum drahtgebundenen oder drahtlosen Kommunizieren mit einer Endgeräteeinrichtung (nicht dargestellt) eingerichtet ist. Im Ausführungsbeispiel der Figur 1 ist das Kommunikationsmodul 15 als Funkmodul ausgebildet und so eingerichtet, dass es beispielsweise mittels Bluetooth oder einem anderem Nahfeldkommunikationsstandart eine digitale Kommunikationsverbindung zu einem Endgerät aufbauen kann, sodass der Autoschlüssel mit einem auf dem Endgerät ablaufenden Anwendungsprogramm digital kommunizieren kann.

Wurde eine Verbindung zwischen der Endgeräteeinrichtung bzw. dem darauf ablaufenden Anwendungsprogramm und dem Kommunikationsmodul 15 des Autoschlüssels 10 etabliert, so ist der Autoschlüssel 10 so eingerichtet, dass die durch das PKI-Modul 14 bereitgestellte Public-Key-Infrastruktur-Funktionalität dem Anwendungsprogramm der Endgeräteeinrichtung über die bestehende digitale Kommunikationsverbindung bereitgestellt wird.

Damit wird dem Anwendungsprogramm die Möglichkeit eröffnet, auf die Public-Key-Infrastruktur-Funktionalität des PKI-Moduls 14 des Autoschlüssels 10 zuzugreifen und diese für eine externe Kommunikation mit einem dritten Kommunikationsteilnehmer zu verwenden, wenn eine digitale Kommunikationsverbindung zwischen der Endgeräteeinrichtung einerseits und dem Autoschlüssel 10 andererseits besteht. So lassen sich Daten, die an den dritten Kommunikationsteilnehmer gesendet werden sollen, mit Hilfe der durch das PKI-Modul 14 bereitgestellten Public-Key-Infrastruktur-Funktionalität signieren und/oder verschlüsseln bzw. empfangene Daten hinsichtlich der dort enthaltenen Signatur verifizieren und/oder entschlüsseln.

Der Autoschlüssel 10 weist des Weiteren in seinem Gehäuse 11 ein Display 16 auf, wie im Ausführungsbeispiel der Figur 1 gezeigt. Dies ist allerdings nicht zwingend für die grundlegende Funktionalität des Autoschlüssels 10 erforderlich. Auf dem Display 16 können Informationen wiedergegeben werden, die im Bezug zu der Public-Key-Infrastruktur-Funktionalität des PKI-Moduls 14 stehen.

In einer vorteilhaften Ausführungsform kann auf dem Display ein von dem Kommunikationsmodul 15 generierter Verbindungscode angezeigt werden, um eine digitale Kommunikationsverbindung zwischen dem Autoschlüssel 10 und der Endgeräteeinrichtung zu etablieren. Der in dem Display 16 angezeigte Verbindungscode muss dabei von dem Benutzer abgelesen und in der Endgeräteeinrichtung eingegeben werden, woraufhin die Endgeräteeinrichtung eine Verbindungsanfrage an den Autoschlüssel 10 sendet, die den eingegebenen Verbindungscode enthält. Das Kommunikationsmodul 15 überprüft nun, ob der in der Verbindungsanfrage enthaltene Verbindungscode mit dem zuvor generierten Verbindungscode übereinstimmt. Ist dies der Fall, so wird die Kommunikationsverbindung etabliert und eingerichtet. Andernfalls wird die Verbindungsanfrage abgelehnt.

Des Weiteren weist in Figur 1 der Autoschlüssel 10 eine Chipkartenleseeinrichtung 17 auf, in die eine Chipkarte 18 eingeschoben ist. Die Chipkartenleseeinrichtung 17 steht dabei mit dem PKI-Modul in Verbindung.

Mittels der Chipkartenleseeinrichtung 17 ist das PKI-Modul 14 nun so ausgebildet, dass es auf die Public-Key-Infrastruktur-Funktionalität der Chipkarte 18 zugreifen kann, um so mit Hilfe der eingeschobenen Chipkarte 18 beispielsweise Daten zu signieren oder Signaturen zu verifizieren bzw. Daten zu verschlüsseln oder verschlüsselte Daten zu entschlüsseln.

Der Vorteil besteht darin, dass durch Austausch der Chipkarte 18 auch die verwendeten Public-Keys und Private-Keys getauscht werden können, ohne das hierfür der Autoschlüssel umprogrammiert werden muss.

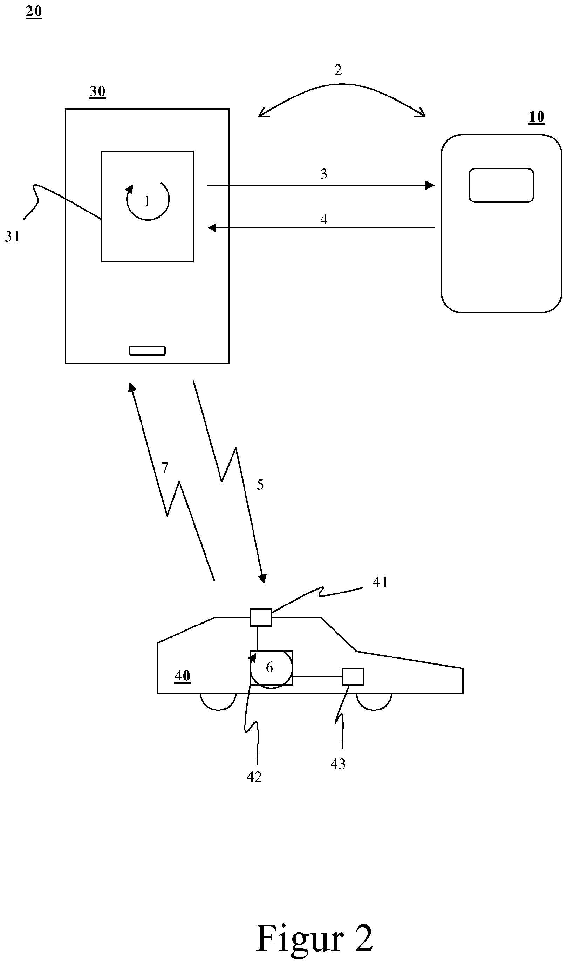

Figur 2 zeigt schematisch ein Kommunikationssystem 20, das einen wie zuvor beschriebenen Autoschlüssel 10, eine Endgeräteeinrichtung 30 sowie einen dritten Kommunikationsteilnehmer 40 in Form eines Straßenfahrzeuges aufweist.

Die Endgeräteeinrichtung 30 ist im Ausführungsbeispiel der Figur 2 als Smartphone dargestellt. Dies ist aber nicht als Einschränkung zu verstehen. Als Endgeräteeinrichtung kommen vielmehr sämtliche elektronische Kommunikationsteilnehmer in Betracht, mit denen ein Benutzer interagieren kann. Beispielsweise seien hier genannt Smartphone, Tablet, Laptop, Desktop-PC oder ähnliches.

Der dritte Kommunikationsteilnehmer 40 ist im Ausführungsbeispiel der Figur 1 als Straßenfahrzeug vorgesehen. Auch hier ist es denkbar, dass der dritte Kommunikationsteilnehmer 40 eine andere Endgeräteeinrichtung darstellt, wie beispielsweise ein Smartphone, Tablet, Laptop oder Desktop-PC. So wäre es denkbar, dass mit Hilfe des Autoschlüssels schlicht eine digitale Nachricht, wie beispielsweise eine E-Mail, signiert und dann an einen anderen Empfänger gesendet wird. Der erfindungsgemäße Autoschlüssel 10 ist dabei nicht beschränkt auf eine digitale Kommunikation zwischen Endgeräteeinrichtung 30 und einem Straßenfahrzeug 40, gleichwohl dies die präferierte Ausführungsform darstellt.

Auf der Endgeräteeinrichtung 30 läuft ein Anwendungsprogramm 31 ab, mit dem der Benutzer der Endgeräteeinrichtung 30 über ein entsprechendes Interface kommunizieren kann. Mit Hilfe des Anwenderprogramms 30 werden nun Daten generiert, was als Schritt 1 in Figur 2 gekennzeichnet ist. Diese generierten Daten sollen an das Straßenfahrzeug 40 übertragen werden und können beispielsweise Befehle enthalten, um bestimmte Funktionen des Straßenfahrzeuges 40 auszuführen. Denkbar ist aber auch, dass die im Schritt 1 generierten Daten Abfragen enthalten, mit denen bestimmte Parameter des Straßenfahrzeuges 40 abgefragt bzw. entsprechende Informationen aus dem Straßenfahrzeug 40 ausgelesen werden sollen. Denkbar wäre hier beispielsweise der sogenannte Fehlercode. Um jedoch sicherzustellen, dass das Straßenfahrzeug 40 nur Daten von Berechtigten erhält, muss hierfür eine sichere Kommunikation etabliert werden.

Hierfür wird in einem nächsten Schritt 2 eine digitale Kommunikationsverbindung zwischen der Endgeräteeinrichtung 30 dem Autoschlüssel 10 etabliert, wie dies beispielsweise in Bezug auf die Figur 1 bereits erläutert wurde. Wurde die Kommunikationsverbindung in Schritt 2 erfolgreich etabliert, so kann das Anwendungsprogramm 31 der Endgeräteeinrichtung 30 auf die Public-Key-Infrastruktur-Funktionalität des Autoschlüssels 10 zugreifen.

Im Ausführungsbeispiel der Figur 2 sollen die an das Straßenfahrzeug 40 zu sendenden Daten signiert werden. Hierfür wird von dem Anwendungsprogramm 31 zunächst ein Hashwert generiert, der dann im Schritt 3 von dem Anwendungsprogramm 31 an den Autoschlüssel 10 übertragen wird. Dort wird mittels des PKI-Moduls aus dem Hashwert und dem hinterlegten Public-Key eine digitale Signatur erzeugt, die dann in einem nächsten Schritt 4 an die Endgeräteeinrichtung 30 und das Anwendungsprogramm 31 zurückgesendet wird. Das Anwendungsprogramm 31 hat somit bezüglich der an das Straßenfahrzeug 40 zu sendenden Daten eine digitale Signatur erzeugt, sodass umgangssprachlich die zu sendenden Daten signiert sind. Das Erzeugen der Signatur erfolgt in der Regel mit dem in dem PKI-Modul des Autoschlüssels hinterlegten Private-Key.

Im nächsten Schritt 5 werden die signierten Daten, d.h. die zu sendenden Daten einerseits und die dazugehörige digitale Signatur andererseits, über eine weitere Kommunikationsverbindung an das Straßenfahrzeug 40 gesendet. Diese Kommunikationsverbindung zwischen der Endgeräteeinrichtung 30 und dem Straßenfahrzeug 40 kann beispielsweise über ein öffentliches Netzwerk erfolgen, wie beispielsweise das Internet, einem VPN oder einem WLAN. Diese Aufzählung ist jedoch nicht abschließend zu verstehen. Vielmehr sind die Endgeräteeinrichtung 30 und das Straßenfahrzeug 40 eingerichtet, miteinander über ein entsprechendes Kommunikationsnetzwerk zu kommunizieren.

Das Straßenfahrzeug 40 weist hierfür ein Kommunikationsmodul 41 auf, um die von der Endgeräteeinrichtung 30 ausgesendeten Daten empfangen zu können. Des Weiteren weist das Straßenfahrzeug 40 ein PKI-Modul auf, das ähnlich dem PKI-Modul des Autoschlüssels 10 ausgebildet ist. Zumindest wird durch das PKI-Modul 42 des Straßenfahrzeuges 40 ebenfalls eine Public-Key-Infrastruktureinrichtung bereitgestellt, um entsprechende PKI-Funktionalitäten dem Straßenfahrzeug 40 zur Verfügung zu stellen.

Das Straßenfahrzeug weist ebenfalls einen Public-Key und einen Private-Key in Form eines Schlüsselpaares auf. Um einen Verifizierung der Daten zu ermöglichen, wurden zuvor in einem nicht dargestellten Schlüsselaustauschprozess die Public-Keys ausgetauscht, so dass das Straßenfahrzeug den Public-Key des Autoschlüsselst und das Anwendungsprogramm den Public-Key des Straßenfahrzeuges hat.

Wurden nun die signierten Daten von dem Straßenfahrzeug 40 empfangen, so wird mit Hilfe des PKI-Moduls 42 die Signatur überprüft. Hierbei wird mit Hilfe gängiger PKI-Verifikationsverfahren überprüft, ob die empfangenen Daten einerseits und die digitale Signatur andererseits von dem berechtigten Sender stammen. Hierfür wird der Public-Key des Autoschlüssels, der in dem PKI-Modul 42 hinterlegt ist, herangezogen, um die mit dem Private-Key des Autoschlüssels erzeugte Signatur zu verifizieren. Demgemäß kann das Straßenfahrzeug 40 mit Hilfe des PKI-Moduls 42 überprüfen, ob die digitale Signatur echt ist oder nicht.

Wurde die Signatur verifiziert, so werden die gesendeten Daten an eine Steuereinrichtung 43 des Straßenfahrzeuges 40 übertragen. Handelt es sich bei den Daten beispielsweise um Befehle zum Ausführen von speziellen Funktionen des Straßenfahrzeuges 40, so werden diese Befehle dann von der Steuereinrichtung 43 entsprechend abgearbeitet. Handelt es sich beispielsweise um eine Abfrage von Parametern des Straßenfahrzeuges 40, so werden die Daten von der Steuereinrichtung 43 entsprechend ermittelt und müssen dann wieder zurück an die Endgeräteeinrichtung 30 übertragen werden. Hierfür wird, ähnlich wie bereits schon vorher beschrieben, basierend auf den ermittelten Daten des Straßenfahrzeuges 40 eine digitale Signatur mit Hilfe des PKI-Moduls 42 erzeugt, die dann in einem nächsten Schritt 7 an die Endgeräteeinrichtung 30 übertragen werden. Die Endgeräteeinrichtung 30 empfängt die Daten einerseits und die dazugehörige digitale Signatur andererseits und kann nun wiederum basierend auf dem zuvor ausgetauschten Public-Key des Straßenfahrzeuges die mit dem Private-Key des Straßenfahrzeuges erzeugte digitale Signatur verifizieren.

Somit wird es möglich, mit Hilfe des Autoschlüssels eine sichere digitale Kommunikation mit dem Straßenfahrzeug über eine Endgeräteeinrichtung 30 zu etablieren, ohne dass es hierfür weitere zusätzliche Geräte bedarf.

In gleicher Art und Weise ist es auch möglich, die an das Straßenfahrzeug 40 zu sendenden Daten alternativ oder zusätzlich zu verschlüsseln, wobei hierfür die Endgeräteeinrichtung 30 mittels des Public-Keys des Straßenfahrzeuges die zu sendenden Daten verschlüsselt und an das Straßenfahrzeug überträgt. Das Straßenfahrzeug empfängt die verschlüsselten Daten und entschlüsselt diese mit Hilfe des Private-Key des Straßenfahrzeuges. Sollen Daten zurück an das Anwendungsprogramm gesendet werden, so werden diese Daten mittels des Public-Keys des Autoschlüssels verschlüsselt und an das Anwendungsprogramm übertragen, wobei das Anwendungsprogramm dann mittels der bereitgestellten PKI-Funktionalität des Autoschlüssels die verschlüsselten Daten basierend auf dem Private-Key des Autoschlüssels entschlüsselt.

### Bezugszeichenliste

- 10: Autoschlüssel
- 11: Gehäuse
- 12: Bedientasten
- 13: elektronische Schlüsselfunktion
- 14: PKI-Modul
- 15: Kommunikationsmodul
- 16: Display
- 17: Chipkartenleseeinrichtung
- 18: Chipkarte
- 20: Kommunikationssystem
- 30: Endgeräteeinrichtung
- 31: Anwendungsprogramm
- 40: dritter Kommunikationsteilnehmer/Straßenfahrzeug
- 41: Kommunikationsmodul des Straßenfahrzeuges
- 42: PKI-Modul des Straßenfahrzeuges
- 43: Steuereinheit des Straßenfahrzeuges

## Patentansprüche

1. Autoschlüssel (10) für ein Straßenfahrzeug mit einem Gehäuse (11) und eine in oder an dem Gehäuse (11) vorgesehene mechanische und/oder elektronische Schlüsselfunktion (13) zur Steuerung der Zutritts- und/oder Wegfahrkontrolle eines Straßenfahrzeuges, wobei der Autoschlüssel (10) ein elektronisches PKI-Modul (14) aufweist, das eine digitale Public-Key-Infrastruktur-Funktionalität mit wenigstens einem Public-Key und einem dazu korrespondierenden Private-Key bereitstellt, wobei der Autoschlüssel (10) weiterhin ein Kommunikationsmodul (15) aufweist, das zum Verbinden des Autoschlüssels (10) mit einer zu dem Straßenfahrzeug verschiedenen Endgeräteeinrichtung (30) ausgebildet und zur Bereitstellung der Public-Key-Infrastruktur-Funktionalität des PKI-Moduls (14) auf der Endgeräteeinrichtung (30) eingerichtet ist.

2. Autoschlüssel (10) nach Anspruch 1, **dadurch gekennzeichnet, dass** der Autoschlüssel (10) zum digitalen Signieren von Daten ausgebildet ist, indem das Kommunikationsmodul (15) zu signierende digitale Daten empfängt, wenn das Kommunikationsmodul (15) mit der Endgeräteeinrichtung (30) verbunden ist, eine digitale Signatur mittels des PKI-Moduls (14) in Abhängigkeit von den empfangenen digitalen Daten erzeugt und das Kommunikationsmodul (15) die erzeugte digitale Signatur an die Endgeräteeinrichtung (30) überträgt.

3. Autoschlüssel (10) nach einem der vorhergehenden Ansprüche, **dadurch gekennzeichnet, dass** der Autoschlüssel (10) eingerichtet ist, mittels des Kommunikationsmoduls (15) den wenigstens einen in dem PKI-Modul (14) enthaltenen Public-Key an die mit dem Kommunikationsmodul (15) verbundene Endgeräteeinrichtung (30) zu übertragen.

4. Autoschlüssel (10) nach einem der vorhergehenden Ansprüche, **dadurch gekennzeichnet, dass** das Kommunikationsmodul (15) nur dann eine Verbindung mit einer Endgeräteeinrichtung (30) zulässt, wenn die Endgeräteeinrichtung (30) eine Verbindungsanfrage an das Kommunikationsmodul (15) sendet, die einen von dem Kommunikationsmodul (15) generierten, gültigen Verbindungscode enthält.

5. Autoschlüssel (10) nach einem der vorhergehenden Ansprüche, **dadurch gekennzeichnet, dass** in dem Gehäuse (11) des Autoschlüssels (10) ein Display (16) zur Wiedergabe von Informationen vorgesehen ist.

6. Autoschlüssel (10) nach Anspruch 4 und 5, **dadurch gekennzeichnet, dass** das Kommunikationsmodul (15) zum Generieren eines gültigen Verbindungscodes und zum Anzeigen des generierten, gültigen Verbindungscodes auf dem Display (16) des Autoschlüssels (10) eingerichtet ist.

7. Autoschlüssel (10) nach einem der vorhergehenden Ansprüche, **dadurch gekennzeichnet, dass** der Autoschlüssel (10) eine Chipkartenleseeinrichtung (17) zum Aufnehmen einer Chipkarte (18) mit integriertem Schaltkreis aufweist, wobei die Chipkartenleseeinrichtung (17) zum Bereitstellen der Chipkartenfunktion der Chipkarte (18) eingerichtet ist, wenn die Chipkarte (18) in der Chipkartenleseeinrichtung (17) aufgenommen ist, wobei das PKI-Modul (14) zur Bereitstellung der Public-Key-Infrastruktur-Funktionalität mittel der durch die Chipkartenleseeinrichtung (17) bereitgestellten Chipkartenfunktion der aufgenommener Chipkarte (18) ausgebildet ist.

8. Kommunikationssystem (20) mit mindestens einem Autoschlüssel (10) eingerichtet nach einem der vorhergehenden Ansprüche und einem auf einer Endgeräteeinrichtung (30) ausführbaren Anwendungsprogramm (31), das mittels der Endgeräteeinrichtung (30) zur separaten digitalen Kommunikation mit einem dritten Kommunikationsteilnehmer einerseits und zum Verbinden mit dem Autoschlüssel (10) andererseits eingerichtet ist, wenn das Anwendungsprogramm (31) auf der Endgeräteeinrichtung (30) ausgeführt wird, um dem Anwendungsprogramm (31) die Public-Key-Infrastruktur-Funktionalität des PKI-Moduls (14) des Autoschlüssels (10) bereitzustellen.

9. Kommunikationssystem (20) nach Anspruch 8, **dadurch gekennzeichnet, dass** das Kommunikationssystem (20) ein Straßenfahrzeug (40) als dritten Kommunikationsteilnehmer (40) aufweist, wobei das Anwendungsprogramm (31) und das Straßenfahrzeug (40) zur digitalen Kommunikation untereinander ausgebildet sind.

10. Kommunikationssystem (20) nach Anspruch 8 oder 9, **dadurch gekennzeichnet, dass** das Kommunikationssystem (20) den dritten Kommunikationsteilnehmer (40) umfasst und der dritte Kommunikationsteilnehmer (40) und das Anwendungsprogramm (31) zum Austausch der jeweils in dem dritten Kommunikationsteilnehmer (40) und dem PKI-Modul (14) hinterlegten Public-Keys der jeweiligen Schlüsselpaare untereinander ausgebildet sind.

11. Kommunikationssystem (20) nach einem der Ansprüche 8 bis 10, **dadurch gekennzeichnet, dass** das Anwendungsprogramm (31) eingerichtet ist, zu versendende Daten digital zu signieren, indem die Daten oder davon abgeleitete Daten an den Autoschlüssel (10) übertragen, mittels des PKI-Moduls (14) auf dem Autoschlüssel (10) eine digitale Signatur erzeugt und die erzeugte digitale Signatur zurück an das Anwendungsprogramm (31) übertragen wird, und die zu sendenden Daten zusammen mit der erzeugten digitalen Signatur an den dritten Kommunikationsteilnehmer zu übertragen und/oder empfangene Daten, die mit einer digitalen Signatur signiert sind, zu verifizieren, indem die digitale Signatur basierend auf den empfangenen Daten oder davon abgeleiteten Daten verifiziert wird.

12. Kommunikationssystem (20) nach einem der Ansprüche 8 bis 11, **dadurch gekennzeichnet, dass** das Kommunikationssystem (20) den dritten Kommunikationsteilnehmer (40) umfasst und der dritte Kommunikationsteilnehmer (40) eingerichtet ist, empfangene Daten, die mit einer digitalen Signatur signiert sind, zu verifizieren, indem die digitale Signatur basierend auf den empfangenen Daten oder davon abgeleiteten Daten verifiziert wird, und/oder zu versendende Daten digital zu signieren, indem basierend auf den Daten oder davon abgeleitete Daten mittels eines PKI-Moduls (42) des dritten Kommunikationsteilnehmers eine digitale Signatur erzeugt und die zu sendenden Daten zusammen mit der erzeugten digitalen Signatur an das Anwendungsprogramm zu übertragen.

13. Kommunikationssystem (20) nach einem der Ansprüche 8 bis 12, **dadurch gekennzeichnet, dass** das Anwendungsprogramm (31) eingerichtet ist, an den dritten Kommunikationsteilnehmer zu sendende Daten digital zu verschlüsseln, indem die zu verschlüsselnden Daten in Abhängigkeit von dem Public-Key des dritten Kommunikationsteilnehmers unter Anwendung eines Public-Key-Verschlüsselungsverfahrens verschlüsselte werden, und die verschlüsselten digitalen Daten an den dritten Kommunikationsteilnehmer zu übertragen und/oder digital verschlüsselte Daten ausgesendet von dem dritten Kommunikationsteilnehmer (40) zu empfangen und zu entschlüsseln, indem die empfangenen verschlüsselten Daten mittels des in dem PKI-Modul (14) des Autoschlüssels hinterlegten Private-Keys entschlüsselt werden.

14. Kommunikationssystem (20) nach einem der Ansprüche 8 bis 13, **dadurch gekennzeichnet, dass** das Kommunikationssystem (20) den dritten Kommunikationsteilnehmer umfasst und der dritten Kommunikationsteilnehmer eingerichtet ist, digital verschlüsselte Daten ausgesendet von dem Anwendungsprogramm zu empfangen und zu entschlüsseln, indem die empfangenen verschlüsselten Daten mittels eines auf dem dritten Kommunikationsteilnehmer vorgesehenen PKI-Moduls (42) und des darin enthaltenen Private-Keys entschlüsselt werden, und/oder an das Anwendungsprogramm zu sendende Daten digital zu verschlüsseln, indem die zu verschlüsselnden Daten in Abhängigkeit von dem Public-Key des Autoschlüssels unter Anwendung eines Public-Key-Verschlüsselungsverfahrens verschlüsselte werden, und die verschlüsselten digitalen Daten an das Anwendungsprogramm zu übertragen

15. Verfahren zur sicheren Kommunikation mit einem dritten Kommunikationsteilnehmer, der zur digitalen Kommunikation mit einem auf einer Endgeräteeinrichtung (30) ablaufenden Anwendungsprogramm (31) ausgebildet ist, **dadurch gekennzeichnet, dass** ein Autoschlüssel (10) nach einem der Ansprüche 1 bis 7 bereitgestellt wird, wobei die Kommunikation mit dem dritten Kommunikationsteilnehmer und dem Anwendungsprogramm (31) mittels des Autoschlüssels (10) digital signiert und/oder digital verschlüsselt wird.

## Claims

1. A car key (10) for a road vehicle comprising a housing (11) and a mechanical and/or electronic key function (13) provided in or on the housing (11) for controlling access and/or departure of a road vehicle, **characterised in that** the car key (10) comprises an electronic PKI module (14) which provides a digital public key infrastructure functionality with at least one public key and a private key corresponding thereto, wherein the car key (10) further comprises a communication module (15) which is designed to connect the car key (10) to a terminal device (30) other than the road vehicle and is set up to provide the public key infrastructure functionality of the PKI module (14) on the terminal device (30).

2. Car key (10) according to claim 1, **characterized in that** the car key (10) is designed to digitally sign data by the communication module (15) receiving digital data to be signed when the communication module (15) is connected to the terminal device (30), generating a digital signature by means of the PKI module (14) depending on the received digital data, and the communication module (15) transmitting the generated digital signature to the terminal device (30).

3. Car key (10) according to one of the preceding claims, **characterised in that** the car key (10) is set up to transmit the at least one public key contained in the PKI module (14) to the terminal device (30) connected to the communication module (15) by means of the communication module (15).

4. Car key (10) according to any one of the preceding claims, **characterised in that** the communication module (15) only allows a connection to a terminal device (30) if the terminal device (30) sends a connection request to the communication module (15) containing a valid connection code generated by the communication module (15).

5. Car key (10) according to one of the preceding claims, **characterised in that** a display (16) for displaying information is provided in the housing (11) of the car key (10).

6. Car key (10) according to claim 4 and 5, **characterised in that** the communication module (15) is arranged to generate a valid connection code and to display the generated valid connection code on the display (16) of the car key (10).

7. A car key (10) according to any one of the preceding claims, **characterised in that** the car key (10) comprises a smart card reader (17) for receiving an integrated circuit smart card (18), the smart card reader (17) being arranged to provide the smart card functionality of the smart card (18), when the smart card (18) is accommodated in the smart card reader (17), the PKI module (14) being adapted to provide the public key infrastructure functionality by means of the smart card function of the accommodated smart card (18) provided by the smart card reader (17).

8. A communication system (20) comprising at least one car key (10) arranged according to any one of the preceding claims and an application program (31) executable on a terminal device (30) and arranged by means of the terminal device (30) for separate digital communication with a third communication party on the one hand and for connecting to the car key (10) on the other hand when the application program (31) is executed on the terminal device (30) to provide the application program (31) with the public key infrastructure functionality of the PKI module (14) of the car key (10).

9. A communication system (20) according to claim 8, **characterised in that** the communication system (20) comprises a road vehicle (40) as a third communication participant (40), wherein the application program (31) and the road vehicle (40) are adapted for digital communication with each other.

10. Communication system (20) according to claim 8 or 9, **characterized in that** the communication system (20) comprises the third communication subscriber (40) and the third communication subscriber (40) and the application program (31) are designed for exchanging the public keys of the respective key pairs stored in the third communication subscriber (40) and the PKI module (14) with each other.

11. A communication system (20) according to any one of claims 8 to 10, **characterized in that** the application program (31) is arranged to digitally sign data to be sent by transmitting the data or data derived therefrom to the car key (10), generating a digital signature on the car key (10) by means of the PKI module (14), and transmitting the generated digital signature back to the application program (31), and transmitting the data to be sent together with the generated digital signature to the third communication party and/or verifying received data signed with a digital signature by verifying the digital signature based on the received data or data derived therefrom.

12. A communication system (20) according to any one of claims 8 to 11, **characterized in that** the communication system (20) comprises the third communication subscriber (40) and the third communication subscriber (40) is arranged to verify received data signed with a digital signature by verifying the digital signature based on the received data or data derived therefrom, and/or to digitally sign data to be sent by generating a digital signature based on the data or data derived therefrom by means of a PKI module (42) of the third communication subscriber and to transmit the data to be sent together with the generated digital signature to the application program.

13. A communication system (20) according to any one of claims 8 to 12, **characterized in that** the application program (31) is arranged to digitally encrypt data to be sent to the third communication subscriber by encrypting the data to be encrypted in dependence on the public key of the third communication subscriber using a public key encryption method, and to transmit the encrypted digital data to the third communication subscriber and/or to receive digitally encrypted data transmitted by the third communication subscriber (40) and to decrypt it by decrypting the received encrypted data by means of the private key stored in the PKI module (14) of the auto-key.

14. A communication system (20) according to any one of claims 8 to 13, **characterised in that** the communication system (20) comprises the third communication subscriber and the third communication subscriber is arranged to receive and decrypt digitally encrypted data transmitted from the application program by decrypting the received encrypted data using a PKI module (42) provided on the third communication subscriber and the private key contained therein, and/or digitally encrypt data to be sent to the application program by encrypting the data to be encrypted in dependence on the public key of the auto key using a public key encryption method, and transmit the encrypted digital data to the application program.

15. Method for secure communication with a third communication subscriber which is designed for digital communication with an application program (31) running on a terminal device (30), **characterized in that** a car key (10) according to one of claims 1 to 7 is provided, the communication with the third communication subscriber and the application program (31) being digitally signed and/or digitally encrypted by means of the car key (10).

## Revendications

1. Clé de voiture (10) pour un véhicule routier, comprenant un boîtier (11) et une fonction de clé mécanique et/ou électronique (13) prévue dans ou au niveau du boîtier (11) pour contrôler l'accès à et/ou le départ d'un véhicule routier,
dans laquelle
la clé de véhicule (10) comprend un module ICP électronique (14) qui fournit une fonctionnalité numérique d'infrastructure à clé publique avec au moins une clé publique et une clé privée correspondant à celle-ci,
la clé de voiture (10) comprend en outre un module de communication (15) qui est adapté pour connecter la clé de voiture (10) à un dispositif terminal (30) autre que le véhicule routier, et qui est conçu pour fournir la fonctionnalité d'infrastructure à clé publique du module ICP (14) sur le dispositif terminal (30).

2. Clé de voiture (10) selon la revendication 1,
**caractérisée en ce que** la clé de voiture (10) est adaptée pour signer numériquement des données du fait que le module de communication (15) reçoit des données numériques à signer, lorsque le module de communication (15) est connecté au dispositif terminal (30), et génère une signature numérique au moyen du module ICP (14) en fonction des données numériques reçues, et le module de communication (15) transmet la signature numérique générée au dispositif terminal (30).

3. Clé de voiture (10) selon l'une des revendications précédentes,
**caractérisée en ce que** la clé de voiture (10) est conçue pour transmettre ladite au moins une clé publique, contenue dans le module ICP (14), au dispositif terminal (30) connecté au module de communication (15), au moyen du module de communication (15).

4. Clé de voiture (10) selon l'une des revendications précédentes,
**caractérisée en ce que** le module de communication (15) ne permet une connexion avec un dispositif terminal (30) que si le dispositif terminal (30) envoie au module de communication (15) une demande de connexion qui contient un code de connexion valide généré par le module de communication (15).

5. Clé de voiture (10) selon l'une des revendications précédentes,
**caractérisée en ce qu'**un écran d'affichage (16) destiné à afficher des informations est prévu dans le boîtier (11) de la clé de voiture (10).

6. Clé de voiture (10) selon les revendications 4 et 5,
**caractérisée en ce que** le module de communication (15) est conçu pour générer un code de connexion valide et pour afficher le code de connexion valide généré sur l'écran d'affichage (16) de la clé de voiture (10).

7. Clé de voiture (10) selon l'une des revendications précédentes,
**caractérisée en ce que** la clé de voiture (10) comprend un moyen lecteur de carte à puce (17) pour recevoir une carte à puce (18) à circuit intégré, le moyen lecteur de carte à puce (17) étant conçu pour fournir la fonction de carte à puce de la carte à puce (18), lorsque la carte à puce (18) est logée dans le moyen lecteur de carte à puce (17), le module ICP (14) étant adapté pour fournir la fonctionnalité d'infrastructure à clé publique au moyen de la fonction de carte à puce de la carte à puce logée (18) fournie par le moyen lecteur de carte à puce (17).

8. Système de communication (20) comprenant au moins une clé de voiture (10) selon l'une des revendications précédentes et un programme d'application (31) exécutable sur un dispositif terminal (30) et conçu pour une communication numérique séparée avec un tiers de communication d'une part et pour la connexion à la clé de voiture (10) d'autre part, au moyen du dispositif terminal (30), lorsque le programme d'application (31) est exécuté sur le dispositif terminal (30) afin de fournir la fonctionnalité d'infrastructure à clé publique du module ICP (14) de la clé de voiture (10) au programme d'application (31).

9. Système de communication (20) selon la revendication 8,
**caractérisé en ce que** le système de communication (20) comprend un véhicule routier (40) en tant que tiers de communication (40), le programme d'application (31) et le véhicule routier (40) étant adaptés pour une communication numérique l'un avec l'autre.

10. Système de communication (20) selon la revendication 8 ou 9,
**caractérisé en ce que** le système de communication (20) inclut le tiers de communication (40), et le tiers de communication (40) et le programme d'application (31) sont adaptés pour échanger entre eux les clés publiques des paires de clés respectives stockées dans le tiers de communication (40) et dans le module ICP (14), respectivement.

11. Système de communication (20) selon l'une des revendications 8 à 10,
**caractérisé en ce que** le programme d'application (31) est conçu pour signer numériquement des données à envoyer en transmettant les données ou des données dérivées de celles-ci à la clé de voiture (10), en générant une signature numérique sur la clé de voiture (10) au moyen du module ICP (14), et en retransmettant la signature numérique générée au programme d'application (31), et pour transmettre les données à envoyer, conjointement avec la signature numérique générée, au tiers de communication, et/ou pour vérifier les données reçues, signées avec une signature numérique, en vérifiant la signature numérique sur la base des données reçues ou des données dérivées de celles-ci.

12. Système de communication (20) selon l'une des revendications 8 à 11,
**caractérisé en ce que** le système de communication (20) inclut le tiers de communication (40), et le tiers de communication (40) est conçu pour vérifier des données reçues, signées avec une signature numérique, en vérifiant la signature numérique sur la base des données reçues ou des données dérivées de celles-ci, et/ou pour signer numériquement des données à envoyer en générant, sur la base des données ou des données dérivées de celles-ci, une signature numérique au moyen d'un module ICP (42) du tiers de communication, et pour transmettre les données à envoyer, conjointement avec la signature numérique générée, au programme d'application.

13. Système de communication (20) selon l'une des revendications 8 à 12,
**caractérisé en ce que** le programme d'application (31) est conçu pour chiffrer numériquement des données à envoyer au tiers de communication en chiffrant les données à chiffrer en fonction de la clé publique du tiers de communication en mettant en oeuvre un procédé de chiffrage à clé publique, et pour transmettre les données numériques chiffrées au tiers de communication et/ou pour recevoir des données numériques chiffrées émises par le tiers de communication (40) et pour les déchiffrer en déchiffrant les données chiffrées reçues au moyen de la clé privée stockée dans le module ICP (14) de la clé de voiture.

14. Système de communication (20) selon l'une des revendications 8 à 13,
**caractérisé en ce que** le système de communication (20) inclut le tiers de communication, et le tiers de communication est conçu pour recevoir et déchiffrer des données chiffrées numériquement émises par le programme d'application en déchiffrant les données chiffrées reçues au moyen d'un module ICP (42) prévu sur le tiers de communication et au moyen de la clé privée qu'il contient, et/ou pour chiffrer numériquement des données à envoyer au programme d'application en chiffrant les données à chiffrer en fonction de la clé publique de la clé de voiture en mettant en œuvre un procédé de chiffrement à clé publique, et pour transmettre les données numériques chiffrées au programme d'application.

15. Procédé de communication sécurisée avec un tiers de communication adapté pour communiquer numériquement avec un programme d'application (31) s'exécutant sur un dispositif terminal (30),
**caractérisé en ce que** l'on fournit une clé de voiture (10) selon l'une des revendications 1 à 7, la communication avec le tiers de communication et avec le programme d'application (31) étant signée numériquement et/ou chiffrée numériquement au moyen de la clé de voiture (10).
